# EUROPEAN PATENT APPLICATION

(11) **EP 4 744 998 A1**
(43) Date of publication of application: **20.05.2026**
(21) Application number: 24854302.7
(22) Date of filing: 01.07.2024
(51) Int. Cl.: B60W 50/14, B60W 40/09, G06Q 50/40, G06Q 50/10

(54) **SERVER, OPERATION METHOD THEREOF, AND ELECTRONIC DEVICE**

(30) Priority: 17.08.2023 KR 20230107534
(71) Applicant: LG Energy Solution, Ltd., Seoul 07335 (KR)
(72) Inventor: KIM, Geum Bee, Daejeon 34122 (KR); KIM, Kang San, Daejeon 34122 (KR); YOO, Ji Won, Daejeon 34122 (KR); HEO, Jung Eun, Daejeon 34122 (KR)
(74) Representative: Plasseraud IP
(86) International application number: PCT/KR2024/009237
(87) International publication number: WO 2025/037749

(57) **Abstract**

According to embodiments disclosed herein, a server may include a communication circuit, a memory, and a processor operatively connected to the communication circuit and the memory, wherein the processor is configured to collect vehicle use data of a user, determine a user type based on the use data, receive at least any one selection item among a plurality of improvable items from the user, and generate guide information for the user based on the selection item and the user type.

## Description

### TECHNICAL FIELD

### CROSS-REFERENCE TO RELATED APPLICATION

This application claims priority to and the benefit of Korean Patent Application No. 10-2023-0107534 filed in the Korean Intellectual Property Office on August 17, 2023, the entire contents of which are incorporated herein by reference.

### TECHNICAL FIELD

Embodiments disclosed herein relate to a server, a method of operating the same, and an electronic device.

### BACKGROUND ART

Recently, research and development on secondary batteries has been actively conducted. Here, the secondary battery is a battery capable of charging and discharging and includes all conventional Ni/Cd batteries and Ni/MH batteries, etc. and recent lithium ion batteries. Among the secondary batteries, the lithium-ion batteries have an advantage of having a much higher energy density than the conventional Ni/Cd batteries, the Ni/MH batteries, and the like. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

When such a battery is provided in a vehicle, individual differences may occur in battery performance, lifetime, safety, etc. depending on vehicle drivers' tendencies. Therefore, a direction of improvement in vehicle use may vary depending on the vehicle drivers' tendencies.

### DISCLOSURE

### TECHNICAL PROBLEM

Embodiments disclosed herein are directed to inducing a user's interest in improving vehicle use by providing type and guide information to the user.

Embodiments disclosed herein are also directed to providing customized services according to a user type by classifying the user type.

Embodiments disclosed herein are also directed to providing guide information for improvement desired by a user according to the user's selection items.

The objects of the embodiments disclosed herein are not limited to the above-described objects, and other objects that are not described will be able to be clearly understood by those skilled in the art from the following descriptions.

### TECHNICAL SOLUTION

According to an embodiment disclosed herein, a server may include a communication circuit, a memory, and a processor operatively connected to the communication circuit and the memory, wherein the processor is configured to collect vehicle use data of a user, determine a user type based on the use data, receive at least any one selection item among a plurality of improvable items from the user, and generate guide information for the user based on the selection item and the user type.

According to an embodiment, the processor may be configured to generate a plurality of single categories related to vehicle use, select a plurality of target categories related to the improvable item among the plurality of single categories, set at least one final category for classifying the user type based on the target categories, and classify each of the final categories based on the use data of the user and determine the user type.

According to an embodiment, the processor may be configured to calculate an evaluation score for the selection item based on the use data, compare data on at least one factor associated with the selection item among the user's pieces of use data with data on the factor of a user with an optimal evaluation score among users included in the same type as the user, and generate the guide information based on the result of comparison.

According to an embodiment, the processor may further compare the data on the factor of the user with the data on the factor of the user with the optimal evaluation score among all users.

According to an embodiment, the improvable item may include at least one of energy efficiency, degradation, safety, charging, and convenience.

According to an embodiment, the processor may provide the user type and the guide information to the user.

According to an embodiment disclosed herein, a method of operating a server may include collecting vehicle use data of a user, determining a user type based on the use data, receiving at least any one selection item among a plurality of improvable items from the user, and generating guide information for the user based on the selection item and the user type.

According to an embodiment, the determining of the user type may include generating a plurality of single categories related to vehicle use, selecting a plurality of target categories related to the improvable item among the plurality of single categories, setting at least one final category for classifying the user type based on the target categories, and classifying each of the final categories based on the use data of the user and determining the user type.

According to an embodiment, the generating of the guide information may include calculating an evaluation score for the selection item based on the use data, comparing data on at least one factor associated with the selection item among the user's pieces of use data with data on the factor of a user with an optimal evaluation score among users included in the same type as the user, and generating the guide information based on the result of comparison.

According to an embodiment, the generating of the guide information may further include comparing the data on the factor of the user with the data on the factor of the user with the optimal evaluation score among all users.

According to an embodiment disclosed herein, an electronic device may include a communication circuit, a memory, and a processor operatively connected to the communication circuit and the memory, wherein the processor may be configured to receive at least any one selection item among a plurality of improvable items from a user, and transmit the selection item to the server and receive a user type and guide information generated based on the user type and the selection item from the server.

According to an embodiment, the processor may receive an evaluation score for the selection item and a result of comparison of data on at least one factor associated with the selection item among the user's pieces use data from the server.

### ADVANTAGEOUS EFFECTS

According to the server and the method of operating the same according to the embodiments disclosed herein, it is possible to improve the user's vehicle use by classifying the user type and providing the guide information.

In addition, various effects that may be directly or indirectly identified through the present document can be provided.

### DESCRIPTION OF DRAWINGS

FIG. 1 is a block diagram showing a configuration of an information provision system according to one embodiment disclosed herein.
FIG. 2 is a view for describing an operation of the information provision system according to one embodiment disclosed herein.
FIG. 3 is a view showing an example in which a user type is determined according to one embodiment disclosed herein.
FIG. 4 is a view showing an example in which the user type is provided according to one embodiment disclosed herein.
FIG. 5 is a view showing an example in which guide information is provided according to one embodiment disclosed herein.
FIG. 6 is a view showing an example in which an evaluation score is schematically provided according to one embodiment disclosed herein.
FIG. 7 is a block diagram showing a configuration of a server according to one embodiment disclosed herein.
FIG. 8 is a block diagram showing a configuration of an electronic device according to one embodiment disclosed herein.
FIG. 9 is a flowchart for describing a method of operating the server according to one embodiment disclosed herein.
FIG. 10 is a flowchart for describing a method of determining the user type according to one embodiment disclosed herein.
FIG. 11 is a flowchart for describing a method of generating the guide information according to one embodiment disclosed herein.

### MODE FOR INVENTION

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

The singular form of a noun corresponding to an item in this document may include one item or a plurality of items unless the relevant context clearly dictates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," or "second" may simply be used to distinguish the corresponding component from another and do not limit the corresponding components in another aspect (e.g., importance or order). When a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., in a wired manner), in a wireless manner, or through a third component.

Each (e.g., a module or a program) of components described herein may include a single object or a plurality of objects. According to various embodiments, one or more among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

As used herein, the term "module," or "part" may include a unit implemented in hardware, software, or firmware and may be used interchangeably with terms such as logic, logic block, component, or circuit. The module may be an integrated part or a minimum unit of the parts or a portion thereof that performs one or more functions. For example, according to one embodiment, the module may be implemented in the form of an application-specific integrated circuit (ASIC).

Various embodiments of this document may be implemented as software (e.g., a program or application) including one or more commands stored in a storage medium (e.g., a memory) that may be read by a machine. For example, a processor of the device may fetch at least one command among one or more commands stored from a storage medium and execute the commands. This allows the device to be operated to perform at least one function according to the at least one fetched command. The one or more commands may include code generated by a compiler or code that may be executed by an interpreter. A device-readable storage medium may be provided in the form of a non-transitory storage medium. Here, "non-transitory storage medium" is a tangible device and only means not including a signal (e.g., electromagnetic waves), and this term does not distinguish between cases in which data is stored semi-permanently and temporarily in the storage medium.

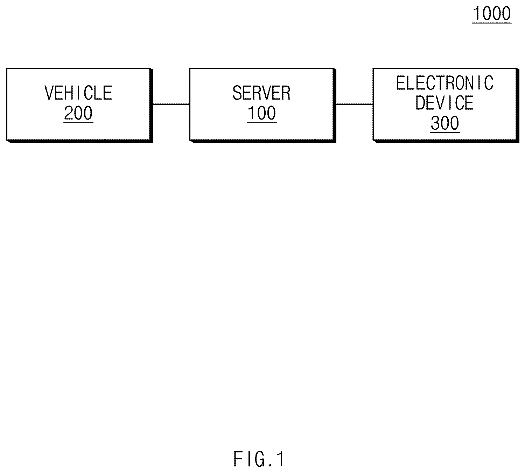

FIG. 1 is a block diagram showing a configuration of an information provision system according to one embodiment disclosed herein.

Referring to FIG. 1, an information provision system 1000 may include a server 100, a vehicle 200, and an electronic device 300.

The information provision system 1000 may determine a user type by analyzing vehicle use data of the user and generate guide information about the user. The information provision system 1000 can improve the user's vehicle use by providing guide information according to the user's selection items. In addition, the information provision system 1000 may induce the user's interest by providing the user type and the guide information to the user.

The server 100 may collect the vehicle use data of the user from the vehicle 200. The vehicle 200 may include all of internal combustion engine vehicles, hybrid electric vehicles, hydrogen vehicles, or electric vehicles and in particular, may be an electric vehicle provided with a battery. Hereinafter, for convenience of description, the vehicle 200 will be described as an electric vehicle provided with a battery as an example.

According to an embodiment, the vehicle 200 may be provided with an on-board device (OBD) device for acquiring vehicle use data, and the server 100 may receive the vehicle use data from the OBD device. The OBD device may directly acquire battery data or receive battery data from a battery management system.

The vehicle use data collected by the server 100 may include various pieces of data such as data (e.g., a SOC, a SOH, a current, or a voltage) on a state of the battery mounted on the vehicle 200, data (e.g., a speed, an acceleration, a traveling time, or a traveling distance) on the traveling of the vehicle 200, data (e.g., weather or time) on an external environment of the vehicle 200, and data on a charging location at which the vehicle 200 is charged.

The server 100 may determine the user type based on use data. The user type may refer to the results of classifying the user's vehicle use tendency. For example, the user type may represent tendencies such as whether vehicle use is regular, discharging habit is balanced, and charging habit is prepared.

The user type may be, for example, expressed as a combination of characters that the user's personality may be identified. For example, the server 100 may express the user type using a combination of a plurality of characters to represent the user's vehicle use tendency, such as a Myers-Briggs Type Indicator (MBTI) that represents an individual's personality type. It goes without saying that the server 100 may express the user type in various ways, such as grades, graphs, symbols, and shapes expressed in numbers as well as a combination of letters.

The server 100 may provide the determined user type to the user. The server 100 may provide a brief description of the type together with the user type. The user may determine his or her vehicle use tendency from the use type and description thereof provided from the server 100.

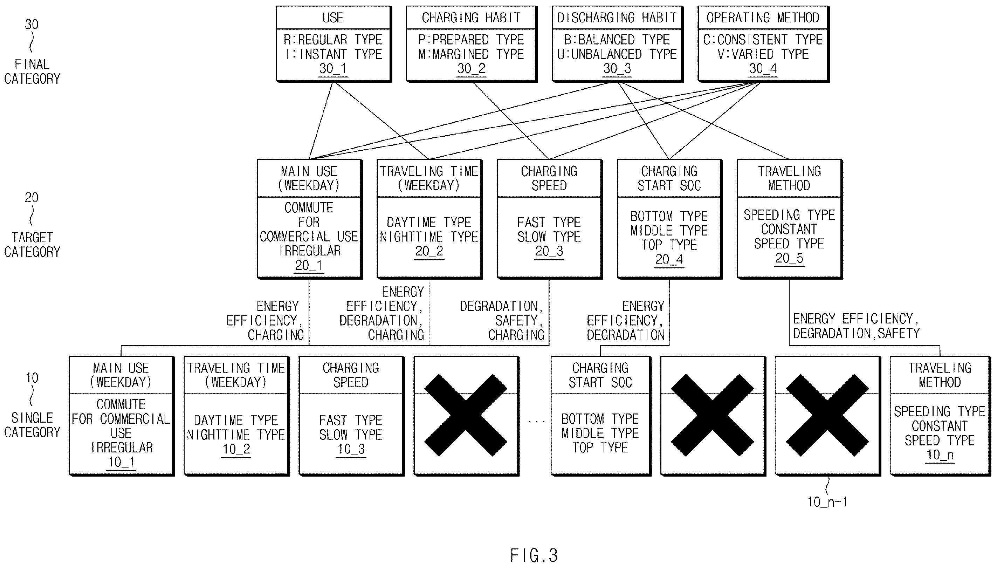

A more specific method of determining the user type by the server 100 will be described below with reference to FIG. 3.

According to an embodiment, the server 100 may provide a customized service to the user according to the determined user type. For example, when the server 100 provides a charging management service, charging timing, a charging amount, etc. may be managed differently for each user in consideration of the user type.

The server 100 may receive at least one selection item among a plurality of improvable items from the user. For example, the user may select an arbitrary item from the improvable items through the electronic device 300, and the server 100 may receive the selection item from the electronic device 300.

According to an embodiment, the plurality of improvable items may include at least one of energy efficiency, degradation, safety, charging, and convenience. Here, the item of "energy efficiency" may be an item aimed at increasing the energy efficiency of a battery, the item of "degradation" may be an item aimed at reducing battery degradation, the item of "safety" may be an item aimed at managing the safety (e.g., cell balancing) of a vehicle and/or battery, the item of "charging" may be an item aimed at optimizing charging costs, and the item of "convenience" may be an item aimed at the user's driving convenience. In addition, improvable matters related to the vehicle use may be included in the improvable items without limitation.

The server 100 may generate guide information for the user based on the selection item and the user type. For example, the server 100 may provide information about the user's vehicle use pattern, battery management plan, driving plan, etc. to improve the selection items selected by the user.

According to an embodiment, the server 100 may calculate an evaluation score for the selection item selected by the user based on use data. For example, the server 100 may calculate an evaluation score by analyzing data associated with the selection item. The evaluation score may be evaluated absolutely by analyzing the vehicle use data of the user or evaluated relatively in relation to other users' data.

The server 100 may compare data on at least one factor associated with the selection item among the user's pieces of use data with data on the factor of a user with an optimal evaluation score among users included in the same type as the user. Here, the optimal evaluation score may mean that the evaluation score is maximum. Since the same user type means that the vehicle use tendency is similar, the server 100 may find a realistic improvement direction by comparing the data of the user with the optimal evaluation score among the same type of users. For example, in data on a specific factor, when the user's data is higher than the data of the user with the optimal evaluation score, an improvement direction that reduces a data value for the corresponding factor may be provided. As described above, the server 100 may compare the data on the user's factor with the data of the user with the optimal evaluation score and generate guide information based on the result of comparison.

According to an embodiment, the server 100 may further compare the data on the user's factor with the data on the factor of the user with the optimal evaluation score among all users. That is, the server 100 may further compare data of other types of users different from the user.

According to an embodiment, the server 100 may provide the user type and the guide information to the user. For example, the server 100 may transmit the user type and the guide information to the electronic device 300, and the user may confirm the received pieces of information through a display of the electronic device 300. The server 100 may transmit the user type and the guide information through a communication API of an application installed on the electronic device 300, and the user may confirm the user type and the guide information by executing the corresponding application on the electronic device 300.

The electronic device 300 may be a user terminal carried by the user. The electronic device 300 may include various types of devices capable of performing data communication. For example, the electronic device 300 may include portable devices such as smartphones or tablets, computer devices such as desktops or laptops, multimedia devices, cameras, wearable devices, virtual reality (VR) devices, etc., and is not limited to the above-described devices. For example, the electronic device 300 may include a server or gateway that may transmit data packets through an application.

For example, the user may be a person registered in the information provision system 1000. As an example, the user may be a person who has subscribed to an application provided by an operator of the information provision system 1000. The user may use services provided by the server 100 using the electronic device 300. For example, the service may include an information provision service. To this end, an application for using an information provision service may be installed on the electronic device 300. The user may execute the application on the electronic device 300 to subscribe to the information provision service, select (input) selection items, and confirm a user type and guide information. The application installed on the electronic device 300 may be an application provided by the operator of the information provision system 1000 (e.g., LG Energy Solution).

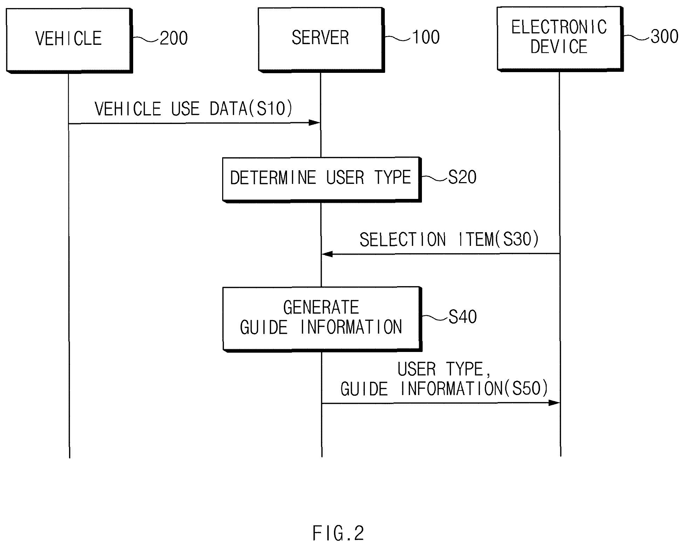

FIG. 2 is a view for describing an operation of the information provision system according to one embodiment disclosed herein.

Referring to FIG. 2, the server 100 may receive vehicle use data from the vehicle 200 (S10). For example, the vehicle 200 may be provided with an OBD device for collecting vehicle data, and the server 100 may receive the collected vehicle data from the OBD device.

The server 100 may determine the user type based on the vehicle use data (S20). The user type may refer to the results of classifying the user's vehicle use tendency. The user type may be, for example, expressed as a combination of character strings that the user's personality may be identified.

The server 100 may receive the selection item selected by the user from the electronic device 300 (S30). For example, the user may select at least one item that needs to be improved among the plurality of improvable items by executing the application on the electronic device 300.

The server 100 may generate guide information based on the selection item and the user type (S40). The server 100 may generate guide information customized to the corresponding user by analyzing the selection item and the user type.

The server 100 may transmit the user type and the guide information to the electronic device 300 (S50). For example, the user may confirm the user type and the guide information received from the server 100 by executing the application on the electronic device 300. The user can improve the selection items when using the vehicle using the guide information provided from the server 100.

After determining the user type, the server 100 may transmit the user type to the electronic device 300. For example, the server 100 may transmit the user type to the electronic device 300 between operations S20 and S30.

FIG. 3 is a view showing an example in which a user type is determined according to one embodiment disclosed herein.

Referring to FIG. 3, in one embodiment, the server 100 may classify the user type by categorizing the use data.

According to an embodiment, the server 100 may generate a plurality of single categories 10 related to the vehicle use. Each single category 10_1, ..., 10_n may be a category that the characteristics related to the vehicle use may be classified. For example, the plurality of single categories 10 may include categories for main use, a traveling time, a charging speed, a charging start state-of-charge (SOC), a traveling method, etc.

Each single category may include subclassifications. The server 100 may analyze the user's use data and determine subclassifications to which the user corresponds in each single category. For example, when the single category is the "main use" category, the subclassifications may have subclassifications of "commuting to work," "for commercial use," and "irregular," and the server 100 may determine that each user is any one of the three subclassifications.

The server 100 may select a plurality of target categories 20 related to improvable items among the plurality of single categories 10. For example, the server 100 may select single categories associated with at least any one of the improvable items among the plurality of single categories 10 as the target category 20. For example, since the "traveling method" category may be related to "energy efficiency," "degradation," and "safety" among the improvable items, the server 100 may select the corresponding category as the target category. A set of target categories may be included in a set of single categories.

The server 100 may set at least one final category 30 for classifying the user type based on the target category 20. The server 100 may combine the characteristics of the target categories 20 and set the final category 30 that may compositely represent these characteristics. For example, the server 100 may analyze the characteristics of the target categories 20 and set the final category 30 of which the number is smaller than the number of target categories 20. As an example, the server 100 may set a usage category 30_1 by combining a main use category 20_1 and a traveling time category 20_2 and set a discharging habit category 30_3 by combining a charging start SOC category 20_4 and a traveling method category 20_5.

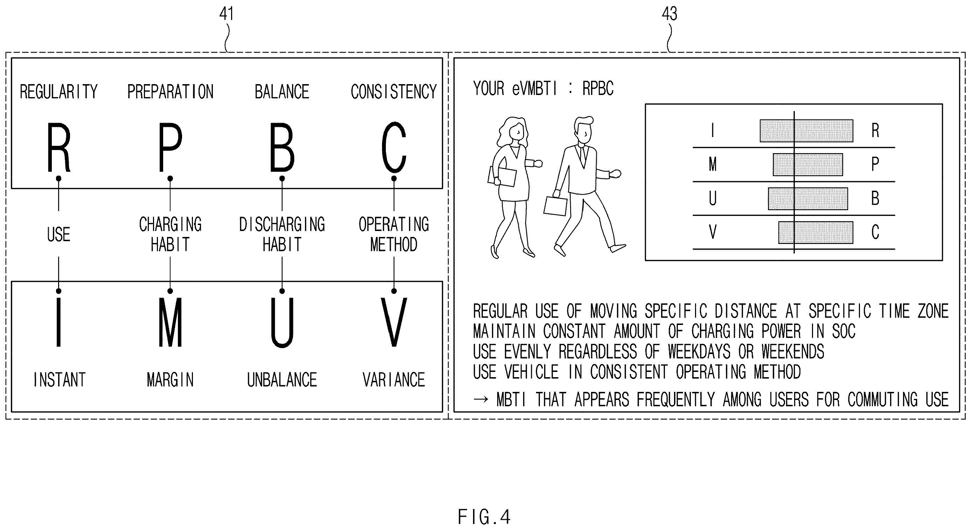

The server 100 may determine the user type by classifying each of the final categories 30 based on the use data. For example, each of the final categories 30 may have a plurality of subclassifications, and the server 100 may determine the subclassifications to which the user corresponds from each of the final categories. The server 100 may determine the user type by combining the determined subclassifications. For example, as shown in FIG. 4, when the final category 30 is set to the use, charging habit, discharging habit, and operating method categories and the subclassifications of each category have R or I for the use category, P or M for the charging habit category, B or U for the discharging habit category, and C or V for the operating method category, the server 100 may determine the user type such as RPUC or IMBV.

FIG. 4 is a view showing an example in which the user type is provided according to one embodiment disclosed herein.

Referring to FIG. 4, the server 100 may provide the user type to the user. For example, the user may execute the application installed on the electronic device 300 and confirm the user type through the display of the electronic device 300.

According to an embodiment, the user may confirm the final category and the subclassification of each final category through one area 41 of the display of the electronic device 300. The user may identify his or her type by confirming his or her type and description of the corresponding type from the server 100.

In one embodiment, the user may confirm his or her type and a brief description of the corresponding type through one area 43 of the display of the electronic device 300. The server 100 may include a ratio of the user type in the subclassifications included in each final category. For example, for the R and I categories included in the use category, the user's tendency may indicate the proportion of each category. The ratio of each subclassification can be marked by a bar graph format as shown in FIG. 4, and can also be marked by various formats such as a circular graph or a line graph.

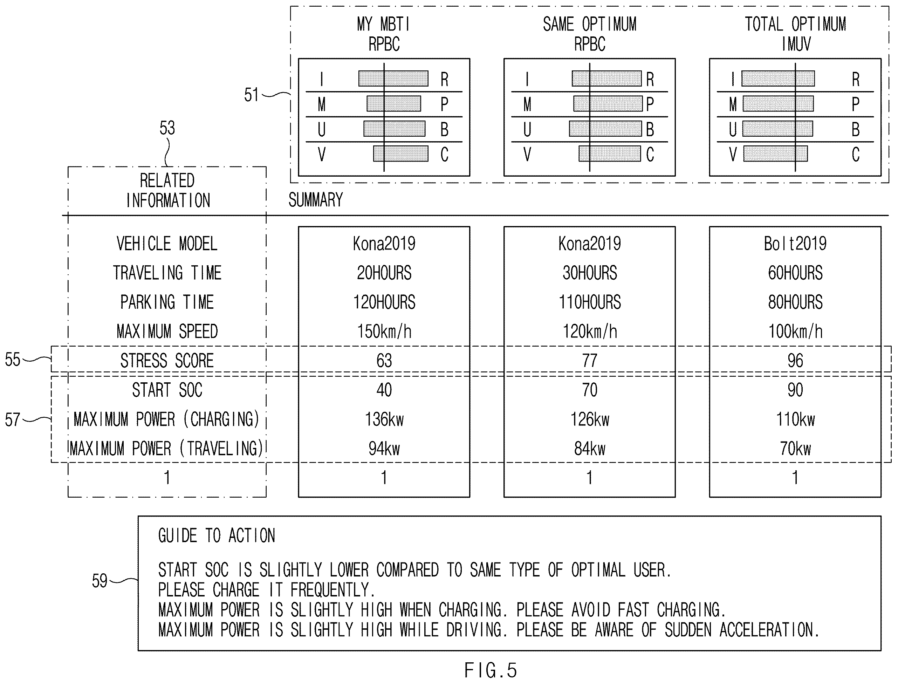

FIG. 5 is a view showing an example in which guide information is provided according to one embodiment disclosed herein.

Referring to FIG. 5, the server 100 may provide the guide information to the user. For example, the user may execute the application installed on the electronic device 300 and confirm the guide information through the display of the electronic device 300.

According to an embodiment, the user may confirm users, a user with an optimal evaluation score among the same type of users, and the type of the user with the optimal evaluation score among all users through one area 51 of the display of the electronic device 300.

The user may confirm items of data provided through one area 53. Items that may be confirmed through the one area 53 may include an evaluation score item for the user's selection item, an item for factors related to the selection item, an item related to general vehicle information, etc. In FIG. 5, the user may confirm that the evaluation score is provided as a "stress score" item by selecting the "degradation" item among the improvement items.

The user may compare evaluation scores through one area 55 and confirm data on the factors related to the selection item through one area 57.

The user may confirm guide information through one area 59. The server 100 may compare data on the user's factors with data on factors of the user with the optimal evaluation score and provide guide information based on the result of comparison. For example, in FIG. 5, it can be confirmed that the user's start SOC is lower than an SOC of the user with the optimal evaluation score, and thus the server 100 may provide a guide to charge frequently to increase the start SOC. Likewise, it can be confirmed that the user's maximum power when driving is higher than that of the user with the optimal evaluation score, and the server 100 may provide a guide to be careful of sudden acceleration to lower the maximum power when driving.

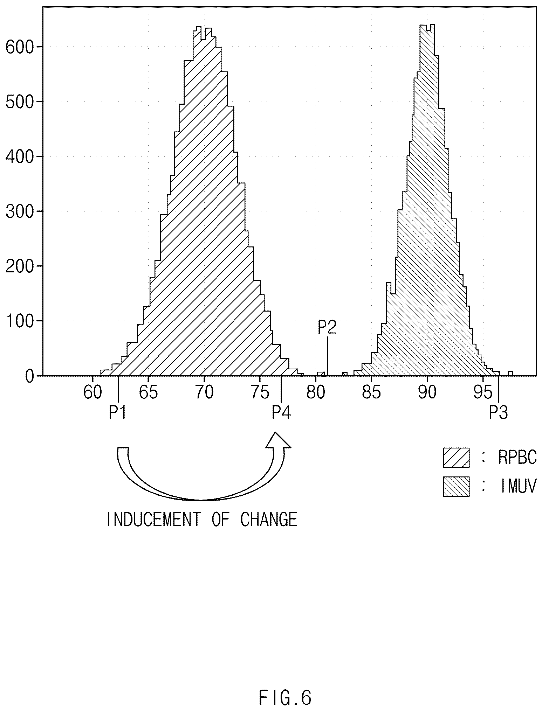

FIG. 6 is a view showing an example in which an evaluation score is schematically provided according to one embodiment disclosed herein.

Referring to FIG. 6, the server 100 may schematically provide the user's evaluation score and improvement goal.

In FIG. 6, an x-axis represents an evaluation score, and a y-axis represents the number of samples. In FIG. 6, point P1 is a point at which the user is located, point P2 is a point at which the user with the optimal evaluation score among users of the same type as the user is located, and point P3 is a point at which the user with the optimal evaluation score among all users is located.

The server 100 may provide a realistic improvement goal P4 to the user based on the result of the user's comparison and induce the improvement in the user's vehicle use.

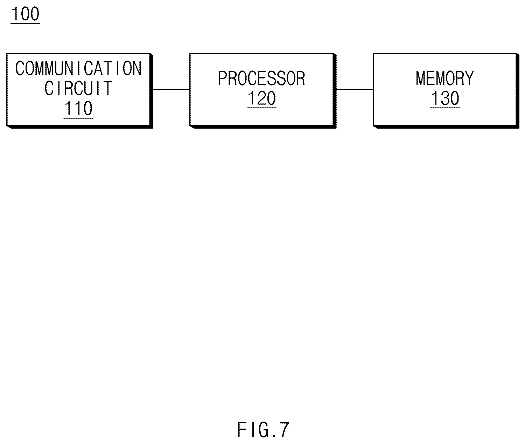

FIG. 7 is a block diagram showing a configuration of a server according to one embodiment disclosed herein.

Referring to FIG. 7, the server 100 according to one embodiment may include a first communication circuit 110, a first processor 120, and a first memory 130.

The first communication circuit 110 may support the establishment of wired or wireless communication connection between the server 100 and an external electronic device (e.g., a vehicle or a user terminal) and communication execution through the established connection. According to one embodiment, the first communication circuit 110 may include a wireless communication circuit (e.g., a cellular communication circuit, a short range wireless communication circuit, or a global navigation satellite system (GNSS) communication circuit) or a wired communication circuit (e.g., a local area network (LAN) communication circuit or a power line communication circuit) and communicate with the external electronic device through a short range communication network, such as Bluetooth, WiFi direct, or infrared data association (IrDA), or a long distance communication network, such as a cellular network, an Internet, a computer network, using the corresponding communication circuit among the above communication circuits. Various types of the first communication circuits 110 may be implemented as one chip or may each be implemented as a separate chip. According to one embodiment, the first communication circuit 110 of the server 100 may communicate with the electronic device 300 and the vehicle 200 of FIG. 1.

The first processor 120 may control the overall operation of the server 100. In various embodiments, the first processor 120 may include one processor core (single core) or include a plurality of processor cores. For example, the processor 120 may include a multi-core, such as a dual-core, a quad-core, or a hexa-core. According to embodiments, the processor 120 may further include a cache memory located internally or externally. According to embodiments, the first processor 120 may be configured as one or more processors. For example, the first processor 120 may include at least one of an application processor, a communication processor, or a graphical processing unit (GPU).

All or some of the first processors 120 may be electrically or operatively coupled with or connected to other components (e.g., the first communication circuit 110 or the first memory 130) in the server 100. The first processor 120 may receive commands of other components, interpret the received commands, and perform calculations or process data according to the interpreted commands. The first processor 120 may interpret and process messages, data, commands, or signals received from the first communication circuit 110 and the first memory 130. The first processor 120 may generate new messages, data, commands, or signals based on the received messages, data, commands, or signals. The first processor 120 may provide the processed or generated messages, data, commands, or signals to the first communication circuit 110 or the first memory 130.

The first processor 120 may process data or signals generated or generated from a program. For example, the first processor 120 may request commands, data, or signals to the first memory 130 to execute or control the program. The first processor 120 may record (or store) or update the commands, data, or signals in the first memory 130 to execute or control the program. According to one embodiment, the first processor 120 may compare user data stored in the first memory 130 and generate guide information.

The first memory 130 may store commands for controlling the server, control command codes, control data, or user data. For example, the first memory 130 may include at least one of an application program, an operating system (OS), middleware, and a device driver. The first memory 130 may include one or more of a volatile memory and a non-volatile memory. The volatile memory may include a dynamic random access memory (DRAM), a static RAM (SRAM), a synchronous DRAM (SDRAM), a phase-change RAM (PRAM), a magnetic RAM (MRAM), a resistive RAM (RRAM), a ferroelectric RAM (FeRAM), etc. The non-volatile memory may include a read only memory (ROM), a programmable ROM (PROM), an electrically programmable ROM (EPROM), an electrically erasable programmable ROM (EEPROM), a flash memory, etc. The memory 130 may further include a non-volatile medium such as a hard disk drive (HDD), a solid state disk (SSD), an embedded multi - media card (eMMC), or a universal flash storage (UFS). According to one embodiment, the first memory 130 may store the vehicle use data and determined type of the user.

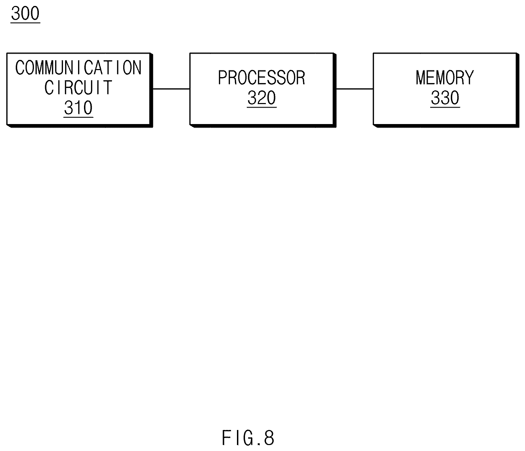

FIG. 8 is a block diagram showing a configuration of an electronic device according to one embodiment disclosed herein.

Referring to FIG. 8, the electronic device 300 according to one embodiment may include a second communication circuit 310, a second processor 320, and a second memory 330.

The second communication circuit 310 may support the establishment of wired or wireless communication connection between the electronic device 300 and an external electronic device (e.g., a server) and communication execution through the established connection. According to one embodiment, the second communication circuit 310 may have substantially the same configuration as the first communication circuit 110 of FIG. 7. In one embodiment, the second communication circuit 310 of the electronic device 300 may communicate with the server 100 of FIG. 1.

The second processor 320 may control the overall operation of the electronic device 300. In one embodiment, the second processor 320 may be substantially the same as the first processor 120 of FIG. 7. More specifically, the second processor 120 may receive a user input and display data (e.g., a user type or guide information) received from the server 100.

The second memory 330 may store commands for controlling the server, control command codes, control data, or user data. In one embodiment, the second memory 330 may be substantially the same as the first memory 130 of FIG. 7.

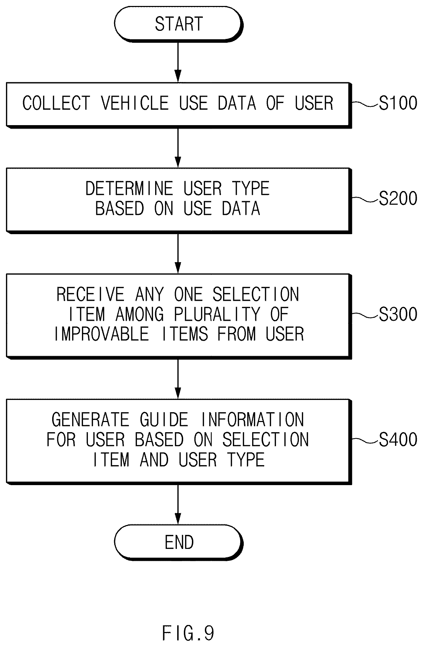

FIG. 9 is a flowchart for describing a method of operating the server according to one embodiment disclosed herein.

Referring to FIG. 9, the method of operating the server may include collecting vehicle use data of a user (S100), determining a user type based on the use data (S200), receiving at least any one selection item among a plurality of improvable items from the user (S300), and generating guide information for the user based on the selection item and the user type (S400).

In operation S100, the server 100 may collect the vehicle use data of the user. For example, the server 100 may receive the vehicle use data from the OBD device provided in the vehicle 200.

In operation S200, the server 100 may determine the user type based on the vehicle use data of the user. For example, the server 100 may express the user type as a combination of characters that the user's personality may be identified.

In operation S300, the server 100 may receive at least any one selection item among the plurality of improvable items from the user. In an embodiment, the plurality of improvable items may include at least one of energy efficiency, degradation, safety, charging, and convenience.

In operation S400, the server 100 may generate guide information for the user based on the selection item and the user type.

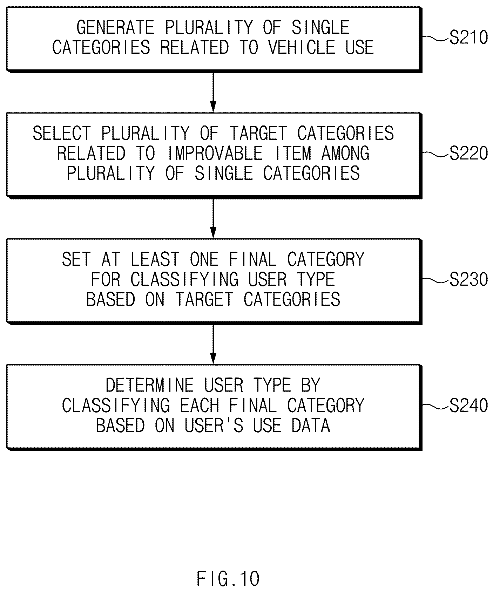

FIG. 10 is a flowchart for describing a method of determining the user type according to one embodiment disclosed herein.

Referring to FIG. 10, in operation S210, the server 100 may generate a plurality of single categories related to the vehicle use. Each single category may be a category that the characteristics related to the vehicle use may be classified.

In operation S220, the server 100 may select a plurality of target categories 20 related to improvable items among the plurality of single categories.

In operation S230, the server 100 may set at least one final category for classifying the user type based on the target categories.

In operation S240, the server 100 may classify each of the final categories 30 based on the use data and determine the user type.

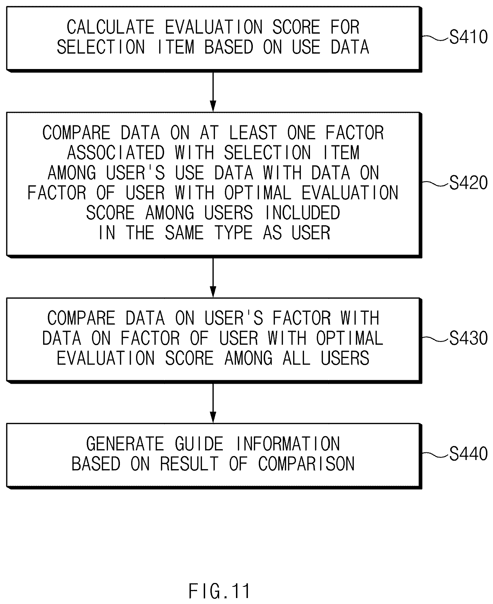

FIG. 11 is a flowchart for describing a method of generating the guide information according to one embodiment disclosed herein.

Referring to FIG. 11, in operation S410, the server 100 may calculate an evaluation score for the selection item based on the use data.

In operation S420, the server 100 may compare data on at least one factor associated with the selection item among the user's pieces of use data with data on the factor of a user with an optimal evaluation score among users included in the same type as the user.

In operation S430, the server 100 may compare the data on the factor of the user with the data on the factor of the user with the optimal evaluation score among all users.

In operation S440, the server 100 may generate guide information based on the result of comparison.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of this document.

## Claims

1. A server comprising:
a communication circuit;
a memory; and
a processor operatively connected to the communication circuit and the memory,
wherein the processor is configured to:
collect vehicle use data of a user;
determine a user type based on the use data;
receive at least any one selection item among a plurality of improvable items from the user; and
generate guide information for the user based on the selection item and the user type.

2. The server of claim 1, wherein the processor is configured to:
generate a plurality of single categories related to vehicle use;
select a plurality of target categories related to the improvable item among the plurality of single categories;
set at least one final category for classifying the user type based on the target categories; and
classify each of the final categories based on the use data of the user and determine the user type.

3. The server of claim 1, wherein the processor is configured to:
calculate an evaluation score for the selection item based on the use data;
compare data on at least one factor associated with the selection item among the user's pieces of use data with data on the factor of a user with an optimal evaluation score among users included in the same type as the user; and
generate the guide information based on the result of comparison.

4. The server of claim 3, wherein the processor further compares the data on the factor of the user with the data on the factor of the user with the optimal evaluation score among all users.

5. The server of claim 1, wherein the improvable item includes at least one of energy efficiency, degradation, safety, charging, and convenience.

6. The server of claim 1, wherein the processor provides the user type and the guide information to the user.

7. A method of operating a server, comprising:
collecting vehicle use data of a user;
determining a user type based on the use data;
receiving at least any one selection item among a plurality of improvable items from the user; and
generating guide information for the user based on the selection item and the user type.

8. The method of claim 7, wherein the determining of the user type includes:
generating a plurality of single categories related to vehicle use;
selecting a plurality of target categories related to the improvable item among the plurality of single categories;
setting at least one final category for classifying the user type based on the target categories; and
classifying each of the final categories based on the use data of the user and determining the user type.

9. The method of claim 7, wherein the generating of the guide information includes:
calculating an evaluation score for the selection item based on the use data;
comparing data on at least one factor associated with the selection item among the user's pieces of use data with data on the factor of a user with an optimal evaluation score among users included in the same type as the user; and
generating the guide information based on the result of comparison.

10. The method of claim 9, wherein the generating of the guide information further includes comparing the data on the factor of the user with the data on the factor of the user with the optimal evaluation score among all users.

11. An electronic device comprising:
a communication circuit;
a memory; and
a processor operatively connected to the communication circuit and the memory,
wherein the processor is configured to:
receive at least any one selection item among a plurality of improvable items from a user; and
transmit the selection item to the server and receive a user type and guide information generated based on the user type and the selection item from the server.

12. The electronic device of claim 11, wherein the processor receives an evaluation score for the selection item and a result of comparison of data on at least one factor associated with the selection item among the user's pieces use data from the server.
